# EUROPEAN PATENT APPLICATION

(11) **EP 1 906 208 A1**
(43) Date of publication of application: **02.04.2008**
(21) Application number: 06020278.5
(22) Date of filing: 27.09.2006
(51) Int. Cl.: G01S 17/93, B60Q 1/48, G01S 13/93

(54) **Park assist system visually marking up dangerous objects**

(71) Applicant: Harman Becker Automotive Systems GmbH, 76307 Karlsbad (DE)
(72) Inventor: Stiegler, Andreas, 76337 Waldbronn (DE); Mohr, Ulrich, 76131 Karlsruhe (DE)
(74) Representative: Bertsch, Florian Oliver

(57) **Abstract**

The present invention relates to a method for monitoring the surrounding of a vehicle comprising the following steps:
- monitoring the surrounding of the vehicle by generating image data of the surrounding of the vehicle,
- determining the intended driving direction of the vehicle,
- detecting harmful objects in the image data taking into account the intended driving direction,
- marking the detected harmful objects in the image data,
- displaying the image data together with the marked harmful objects.

## Description

### Field of the invention

This invention relates to a park assist system and to a method for monitoring the surrounding of a vehicle.

### Related art

In the art park assist systems are known which provide either a visual or audible feedback of the distance between the rear part of the vehicle and any object when driving in the reverse direction. Conventionally, systems are used which image the rear part of the vehicle with an image sensor such as a camera so that the driver is able to directly monitor the area behind the vehicle by looking at a display which is normally provided in the dashboard of the vehicle. Additionally, distant measurement sensors are known which measure the distance from the rear part of the vehicle to any object behind the vehicle. When the vehicle is getting too close to an object while reverse driving, the driver gets a warning tone that a harmful object or obstacle is getting too close.

Furthermore, park assist systems are known which are used in connection with a camera and which are already marking the forecasted driveway inside the captured picture depending on the steering wheel position.

However, in park assist systems using image sensors still a lot of costly damage is caused by objects not recognized by the driver for different reasons. By way of example, in a dark environment such as a parking garage the rear part of the vehicle may not be well-illuminated. Accordingly, a risk exists that the driver overlooks an object in the images displayed on a display.

### Summary

Accordingly, a need exists to provide a park assist system in which any harmful objects can be reliably detected.

This need is met by the features of the independent claims. In the dependent claims preferred embodiments of the invention are described.

According to a first aspect of the invention, a method for monitoring the surrounding of a vehicle is provided, the method comprising the step of monitoring the surrounding of the vehicle by generating image data of the surrounding of the vehicle. Additionally, the intended driving direction of the vehicle is determined. In a next step, harmful objects in the image data are detected taking into account the intended driving direction. According to the invention, these detected objects are then marked in the image data and the image data are displayed together with the marked harmful objects. The marking of the objects in the image improves the recognition rate of potentially harmful objects. By highlighting the detected objects, the driver is informed of the possible danger. Especially in a dark environment this helps to avoid costly damage.

According to one embodiment of the invention, the harmful objects are detected by post-processing the image data. The image data can be processed using different filter algorithms detecting objects in an image. By way of example, one possibility to detect objects in an image is to detect the edges of the harmful object. Edges characterize boundaries and are areas with strong intensity contrasts - a jump in intensity. Accordingly, one way of detecting harmful objects is filtering the image data with an edge detection filter. By way of example, different filtering methods are known, a gradient or a Laplacian filtering method. The gradient method detects the edges by looking for the maximum and minimum of the first derivative of the image, the Laplacian method searching for zero crossings in a second derivative of the image to find edges. When a color image sensor is used, it is also possible to use a color filter. In the art many different filtering methods are known for detecting objects in an image, so that any image processing may be used for detecting a potentially harmful object.

Furthermore or in addition it is possible to detect harmful objects by determining the distance of objects relative to the vehicle wherein the objects in the intended driving direction having a distance smaller than a predetermined distance are classified as harmful objects. The determination of the distance can be achieved using a distance sensor in addition to the image sensor. By way of example, a range sensor based on laser light might be used, however, any other range sensor measuring the distance could be used. Furthermore, it is possible to use a combined distance image sensor such as a three-dimensional image sensor having a depth information. By way of example, these sensors are known as PMD sensors. These sensors provide a pixel-based image and a pixel-based depths information.

The distance information from a distance sensor can also be combined with the post-processing of the image data. When the distance sensor detects an object in one special area of the field of view of the sensor, the position information could be transmitted to the image post-processing. The post-processing can then be focused on predetermined areas of the image where the object is expected to be located.

Normally, the image data are taken from the back of the vehicle when the vehicle is driving in the reverse direction. Furthermore, it is possible to also monitor the rear sides of the vehicle as it is also possible to collide with an object positioned next to the side surfaces of the vehicle.

According to one aspect of the invention, the harmful objects can be marked by inking the harmful objects with a warning color. By highlighting the detected objects with a color, the driver can clearly view the object and can avoid colliding with it. Furthermore, it is possible to use different colors in order to differentiate between different degrees of harmful objects. By way of example, an object very close behind the vehicle in the intended driving direction can have another color than the object having a larger distance to the vehicle. Accordingly, it is possible to use different colors to mark an object depending on the distance, i.e. depending on the probability that the vehicle will hit the object.

Additionally, it is possible to provide an audible indication when the vehicle approaches an object which was considered to be harmful.

The invention further provides a park assist system comprising an image sensor monitoring the surrounding of the vehicle by taking the image data of the vehicle surrounding. Additionally means are provided detecting harmful objects in the surrounding of the vehicle taking into account the intended driving direction. Furthermore, an image processing unit is provided marking the detected harmful objects in the image data. Furthermore, a display is provided displaying the image data with the marked harmful object. According to one aspect of the invention, the image processing unit marks the detected harmful objects with a warning color.

Said means for detecting the harmful objects can comprise the image processing unit post-processing the image data as described above by filtering the image data detecting objects in the image data. Furthermore or in addition said means for detecting harmful objects could comprise a distance sensor measuring the distance of objects relative to the vehicle, the distance sensor further providing a position information of the detected object.

Further aspects of the invention will become apparent in view of the following description making reference to the accompanying drawings, in which
Fig. 1 shows a schematic park assist system of the invention, and
Fig. 2 shows a flowchart comprising the different steps for monitoring detected harmful objects.

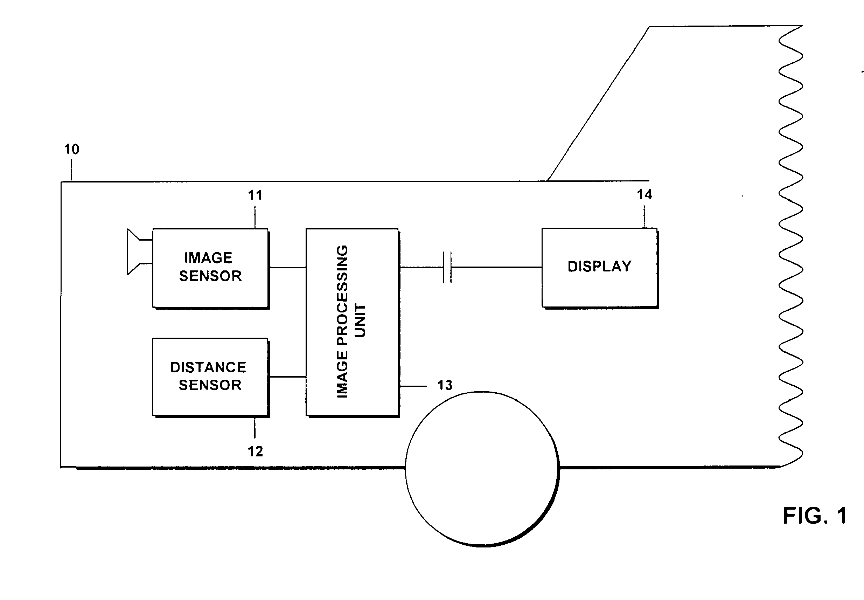

In Fig. 1 a park assist system in a rear part of a vehicle 10 is shown. The park assist system comprises an image sensor 11 taking images of the vehicle surrounding behind the vehicle. In order to get a large field of view, it is possible that different image sensors are provided covering the complete area behind the vehicle. The image sensor can be a conventional 2D camera such as a CCD or a CMOS camera. Furthermore, it is possible that the image sensor is a 3D image sensor, the recorded image data comprising a depth information. When the image sensor is a 3D image sensor, another distance sensor as shown by reference numeral 12 in Fig. 1 needs not to be provided. When the image sensor is a conventional 2D image sensor, the distance sensor may be provided, measuring the distance of possible harmful objects relative to the vehicle. Furthermore, a post-processing unit 13 is provided, the image processing unit 13 processing the images in such a way that the detected harmful objects are inked with a color. The image processing unit can also be used to post-process the images for object detection by applying different filters to the image data. When the objects are detected by filtering the images in the image processing unit 13, the distance sensor need not necessarily be provided. However, the image processing unit can use the distance sensor and use the results of the image post-processing in order to decide whether a harmful object could be detected. The images are then displayed on a display 14, the display being positioned in the dashboard or a middle console to show the driver the current situation behind or on the rear sides of the vehicle.

According to another embodiment, the image sensor is a conventional 2D image sensor such as a CMOS or image sensor. For reliably detecting the distance of potential harmful objects the distance sensor is a 3D image sensor comprising a depth information such as a PMD sensor. The PMD sensor data are then combined with the 2D image data in such a way that detected possible harmful objects are incorporated into the image data of the 2D image sensor 11. Normally, the resolution of the 3D image sensor such as a PMD sensor is not high enough in order to be used as image data to be displayed to the driver. Accordingly, a 2D image sensor may be combined with a PMD sensor, the PMD sensor providing the distance information.

Furthermore, it might be possible to use a radar for the distance sensor. However, for the determination of the relative direction of an object detected by a radar much more computing effort is needed.

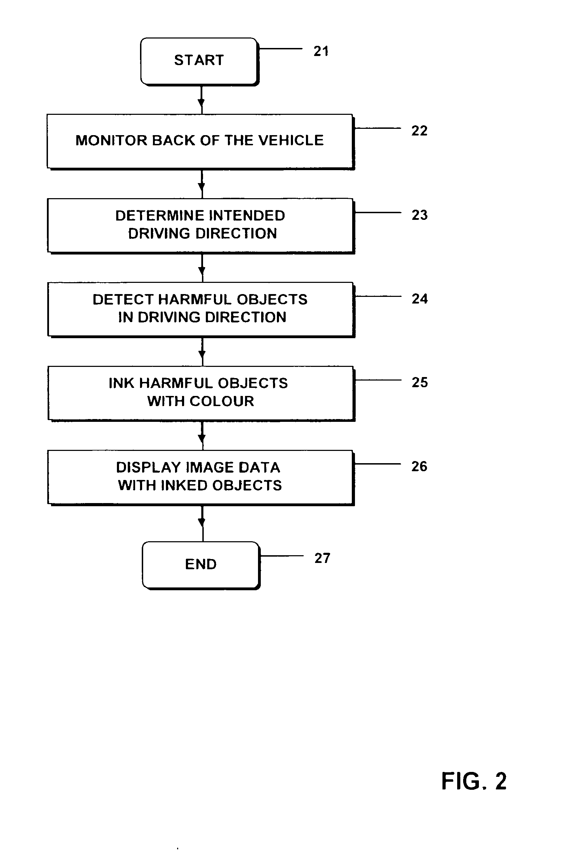

In Fig. 2 the different steps carried out for displaying harmful objects are shown in more detail. The process starts in step 21. In step 22 the rear part of the vehicle is monitored by one or several image sensors 11. In a next step 23 the intended driving direction is determined, taking into account the steering wheel position. In step 24 the potentially harmful objects are detected, taking into account the driving direction of the vehicle. This can be done by either post-processing the image data or by using an additional distance information of the detected objects. Furthermore, it is possible to use a combination of both. In step 25 the objects which were considered to be potentially harmful objects are inked with a color, meaning that the signal intensity as recorded by the image sensor is changed in order to reinforce the difference in signal levels between harmful objects and other parts of the images. By way of example it is possible to use a color for a black-white monitor to intensify the representation of the potentially harmful object. In case of a color monitor, a bright color could be used to further highlight the obstacle. In step 26 the image data are displayed on display 14 together with the inked objects. The method ends in step 27.

Summarizing, this invention helps to improve the recognition rate of potentially harmful objects by marking the detected objects with a warning color.

## Claims

1. Method for monitoring the surrounding of a vehicle comprising the following steps:
- monitoring the surrounding of the vehicle by generating image data of the surrounding of the vehicle,
- determining the intended driving direction of the vehicle,
- detecting harmful objects in the image data taking into account the intended driving direction,
- marking the detected harmful objects in the image data,
- displaying the image data together with the marked harmful objects.

2. Method according to claim 1, wherein the harmful objects are detected by post processing the image data.

3. Method according to claim 1 or 2, wherein the harmful objects are detected by determining the distance of objects relative to the vehicle, wherein the objects in the intended driving direction having a distance smaller than a predetermined distance are classified as harmful objects.

4. Method according to any of the preceding claims, wherein the image data are taken from the back of the vehicle when the vehicle is driving in the reverse direction.

5. Method according to any of the preceding claims, wherein the harmful objects are marked by inking the harmful objects with a warning color.

6. Method according to any of the preceding claims, wherein the driving direction of the vehicle is indicated in the image data by interpreting the steering wheel position.

7. Method according to any of the preceding claims, wherein different colors are used in order to differentiate harmful objects depending on the distance and/or depending on the probability that the vehicle will hit the detected harmful object.

8. Park assist system comprising:
- an image sensor monitoring the surrounding of the vehicle by taking image data of the vehicle surrounding,
- means for detecting harmful objects in the intended driving direction,
- an image processing unit marking the detected harmful object in the image data, and
- display displaying the image data with the marked harmful object.

9. Park assist system according to claim 8, **characterized in that** said means for detecting harmful objects comprises the image processing unit post processing the image data in order to detect harmful objects.

10. Park assist system according to claim 8 or 9, **characterized in that** said means for detecting harmful objects comprises a distance sensor measuring the distance of objects relative to the vehicle and determining the position of the detected objects.

11. Park assist system according to any of claims 8 to 10, **characterized in that** the image processing unit marks the detected harmful objects with a warning color.

12. Park assist system according to any of claims 8-11, **characterized in that** the image sensor is a 2D image sensor, a 3D image sensor comprising a depth information being used for determining the distance of objects relative to the vehicle.
